# FASCICULE DE BREVET EUROPEEN

(11) **EP 0 343 026 B1**
(45) Date de publication et mention de la délivrance du brevet: **24.03.1993**
(21) Numéro de dépôt: 89401111.3
(22) Date de dépôt: 20.04.1989
(51) Int. Cl.: B60N 2/24, B60N 2/14, A61G 3/02

(54) **Agencement d'un siège sur un plancher de véhicule**
Anordnung eines Sitzes auf einem Fahrzeugboden
Arrangement of a seat on a vehicle floor

(30) Priorité: 20.05.1988 FR 8806800
(43) Date de publication de la demande: 23.11.1989
(73) Titulaire: AUTOMOBILES PEUGEOT, 75116 Paris (FR); AUTOMOBILES CITROEN, 92200 Neuilly-sur-Seine (FR)
(72) Inventeur: Lalanne, André, F-93200 Saint Denis (FR)
(74) Mandataire: Moncheny, Michel

(56) Documents cités:
- WO-A-85/05081
- WO-A-87/01661
- DE-A- 2 545 742
- FR-A- 1 222 035
- US-A- 4 341 415

## Description

La présente invention a pour objet un agencement de siège sur un plancher de véhicule et plus particulièrement celui d'un siège arrière situé au droit de la porte latérale d'accès arrière.

Certains véhicules comprennent deux rangées de sièges ou plus disposés sur leur plancher. Dans le cas de trois rangées de sièges, un problème se pose quant à l'accessibilité de la troisième rangée car les constructeurs ne prévoient généralement qu'une seule porte d'accès pour les deux rangées de sièges arrière. Dans d'autres véhicules il n'existe que deux rangées de sièges mais il est nécessaire de pouvoir accéder à l'arrière du véhicule lorsque celui-ci est aménagé en camping-car par exemple.

Le brevet US-A-4 341 415, correspondant au préambule de la revendication 1, a pour objet un aménagement de véhicule automobile dans lequel sont disposées trois rangées de sièges dont les deux dernières rangées ne sont accessibles que par une seule et même porte disposée sensiblement au droit de la deuxième rangée. Les deux sièges médians sont disposés sur des glissières de façon connue mais ces glissières sont disposées, pour le siège au droit de la porte, suivant une orientation de 60° par rapport à l'axe longitudinal du véhicule, tandis que pour l'autre elles sont disposées suivant l'axe longitudinal du véhicule.

Un tel aménagement n'est possible que sur certains véhicules dans lesquels la place disponible est suffisamment importante. En effet, il est nécessaire lorsque l'on recule le deuxième siège médian, de pouvoir disposer d'une distance suffisante entre les sièges avant et ce siège médian pour pouvoir positionner le premier siège médian. De plus, durant cette manoeuvre il est nécessaire de faire bouger successivement deux sièges et ceci au moins deux fois chacun, ce qui conduit à un minimum de quatre opérations pour dégager l'espace situé au droit de la porte latérale arrière. Enfin, il est à remarquer que le siège disposé sur des rails de guidage orientés obliquement par rapport à l'axe de déplacement du véhicule ne dispose plus de son réglage avant/arrière permettant d'ajuster la position de ce siège par rapport au siège avant en fonction de la morphologie de l'utilisateur.

Le but de la présente invention est de proposer un agencement de siège qui pallie les inconvénients évoqués ci-dessus tout en proposant une modularité de la disposition des sièges encore plus importante.

A cet effet, l'agencement, sur un plancher de véhicule, d'un siège situé derrière un siège avant au droit d'une porte latérale d'accès d'un véhicule comportant une assise munie d'un premier dispositif de pivotement, sur une semelle sensiblement carrée mobile par rapport au plancher, autour d'un premier axe vertical de rotation passant sensiblement par le centre de l'assise, est caractérisé en ce que la semelle comprend un second dispositif de pivotement par rapport au plancher autour d'un second axe vertical de rotation excentré par rapport au premier axe et situé à une distance de la porte latérale d'accès sensiblement égale à la largeur d'un siège.

Selon une autre caractéristique de l'invention le second axe de rotation est disposé sur un bord latéral de la semelle et plus particulièrement dans un angle de cette semelle.

L'agencement selon l'invention est en outre caractérisé en ce que le second dispositif comprend des moyens de verrouillage de la semelle par rapport au plancher dans deux positions faisant entre elles un angle de 90°.

En outre le second dispositif comprend au moins deux patins fixés à la semelle et reçus à glissement dans un rail courbe fixé sur le plancher et une articulation dont l'axe de rotation est le second axe de rotation, le rail courbe selon une autre caractéristique étant une portion de cercle centrée sur le second axe de rotation et dont la corde est orientée perpendiculairement à l'axe longitudinal du véhicule.

Selon une autre caractéristique lesdits patins fixés à la semelle sont situés sensiblement au droit de deux angles diagonalement opposés de celle-ci.

Selon une autre caractéristique le premier dispositif de pivotement est monté sur des glissières rectilignes fixées sur la semelle et orientées parallèlement aux bords de celle-ci.

L'invention va être décrite ci-dessous plus en détail en se référant aux dessins annexés sur lesquels :
- la Fig. 1 est une vue de face d'un siège utilisé pour l'agencement selon l'invention ;
- la Fig. 2 est une vue latérale du siège utilisé pour l'agencement selon l'invention ;
- la Fig. 3 est une vue de dessus de l'agencement de sièges selon l'invention :
- la Fig. 4 est une vue en coupe suivant la ligne 4-4 de la Fig. 3 ; et
- les Fig. 5A à 5E représentent des schémas de configurations possibles à l'aide de l'agencement selon l'invention.

Le siège 10 selon l'invention comporte de façon connue une assise 12 et un dossier 14 inclinable par rapport à l'assise. Ce siège est monté pivotant grâce à un premier dispositif de pivotement 16 par rapport à un bâti 18 sensiblement rectangulaire, l'axe vertical de rotation 20 du premier dispositif de pivotement étant sensiblement centré par rapport à l'assise 12 et au bâti 18. Ce premier dispositif de pivotement comporte de façon connue deux châssis 22 et 24 mobiles en rotation l'un par rapport à l'autre, le mouvement de rotation pouvant être bloqué à l'aide d'un levier 26 qui solidarise les deux châssis 22 et 24.

Par ailleurs, le bâti 18 est monté déplaçable en translation grâce à des glissières 28 parallèles à deux de ses côtés. L'immobilisation du bâti 18 par rapport aux glissières est obtenue à l'aide d'un levier 30 de verrouillage. Les parties fixes des glissières 28 sont montées sur une semelle 32 qui a une forme sensiblement carrée et elle est elle-même mobile en rotation autour de l'axe vertical 34 d'un second dispositif de pivotement 36. Le blocage en rotation de ce deuxième dispositif de pivotement par rapport au plancher est obtenu à l'aide d'un levier 38 qui se bloque dans des crans ménagés dans ce plancher (non représenté).

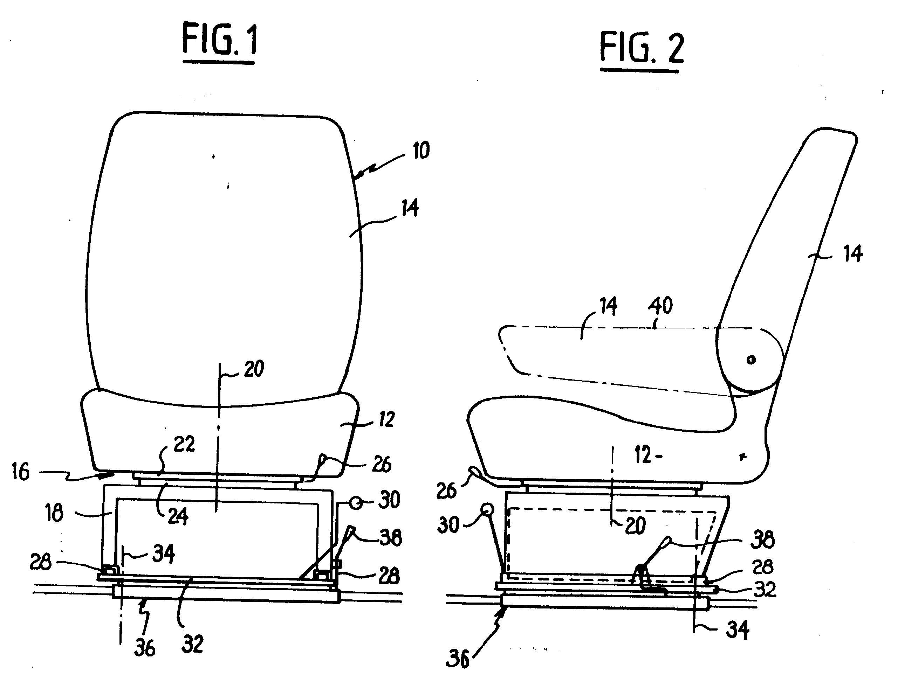

Sur la Fig. 2 on a représenté en trait mixte le dossier 14 en position rabattue selon laquelle la face arrière 40 de ce dossier 14 est utilisable comme table grâce à une rigidité suffisante qui peut lui être conférée par une plaque en matière plastique. Les éléments identiques de cette Fig. 2 portent les mêmes références que celles de la Fig. 1. On constate que l'axe 20 est en position centrée par rapport à l'assise 12 et à la semelle 32.

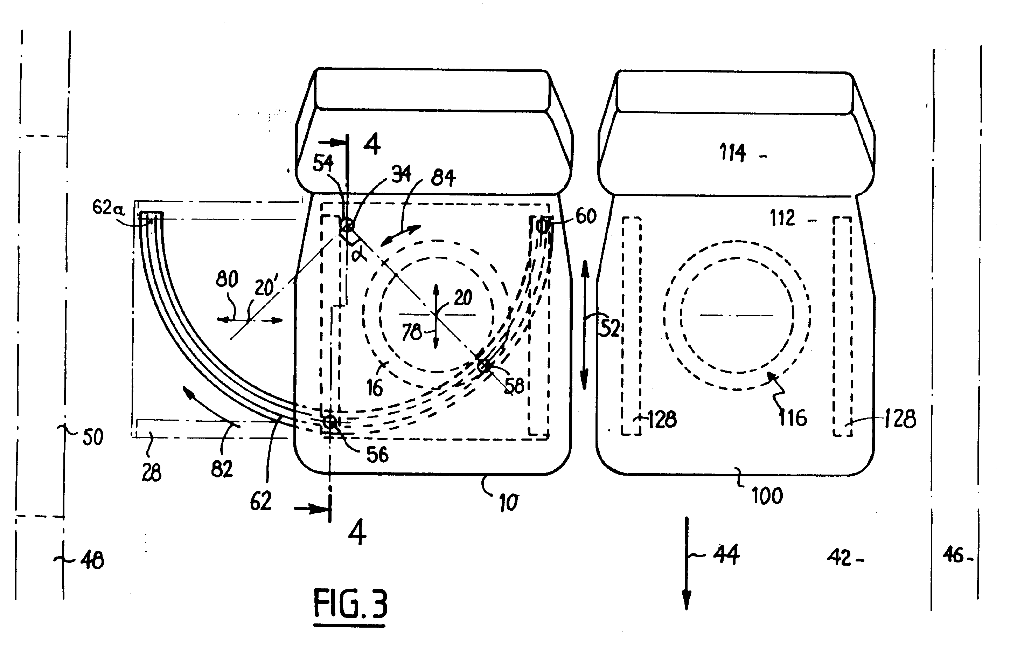

L'agencement selon l'invention est représenté en détail à la Fig. 3. La rangée de sièges considérée comprend deux sièges 10 et 100, le siège 100 étant du type classique muni de glissières 128 directement fixées sur le plancher 42 du véhicule et d'un dispositif de pivotement 116 d'un type connu. Les glissières 128 de ce siège 100 sont orientées suivant l'axe longitudinal du véhicule indiqué par la flèche 44, c'est-à-dire parallèlement aux côtés du véhicule référencés 46 et 48. Le côté 48 comprend une porte latérale d'accès 50, les sièges 10 et 100 étant disposés sensiblement au droit de cette porte 50.

Le siège 100, compte tenu de son montage sur les glissières 128, peut se déplacer d'avant en arrière parallèlement à la direction 44, ces deux mouvements étant symbolisés par la flèche 52.

Le siège 10 est muni d'un second dispositif de pivotement 36 autour d'un second axe vertical 34 et ce dispositif comprend un pivot 54, des patins 56, 58 et 60 ainsi qu'un rail 62. Ce rail 62 a une forme de demi-cercle dont le diamètre est orienté perpendiculairement à la direction 44.

L'axe 34 de pivotement et le pivot 54 sont coaxiaux et situés près du coin d'un angle arrière de la semelle, et sur le plancher à une distance du côté 48 sensiblement égale à la largeur du siège. Les patins d'extrémités 56 et 60 sont eux disposés dans les deux angles opposés adjacents à l'angle dans lequel est situé le pivot 54 et ces patins sont appelés patins de maintien. Le troisième patin 58 est appelé patin de stabilisation. La portion de rail 62 située entre les patins 60 et 56 est un quart de cercle.

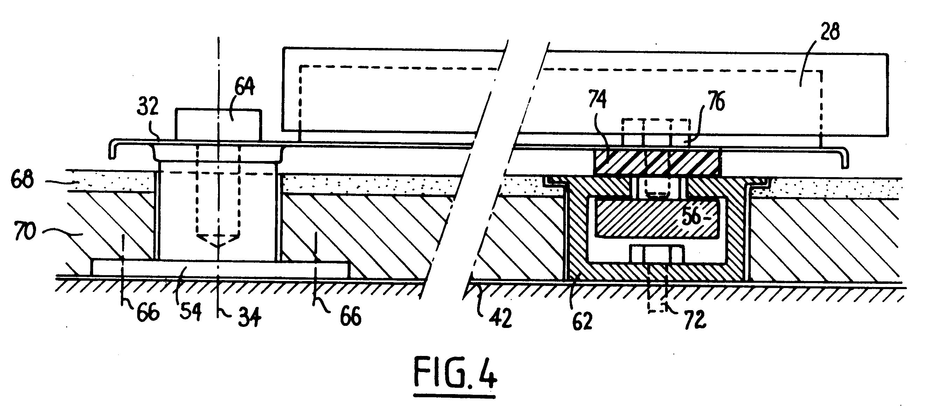

Sur la coupe représentée Fig. 4 on a détaillé le deuxième dispositif de pivotement et l'on retrouve le pivot 54 sur lequel la semelle 32 s'articule à l'aide d'un axe vissé 64 , le pivot 54 étant lui-même fixé par les vis 66 au plancher 42 du véhicule.

En 68 et 70 on a représenté les couches de matériaux connus et utilisés dans un véhicule automobile pour assurer l'insonorisation et l'esthétique du plancher intérieur.

Le rail 62 a un profil en C et il est fixé au plancher par des vis 72, l'ouverture du C étant orientée vers le haut. Chaque patin en forme de T est reçu dans le rail en forme de C avec lequel il coopère par glissement grâce à une bague d'appui 74 qui vient coopérer par glissement avec la face supérieure du rail en forme de C. Ce patin en forme de T est fixé sur la semelle 32 à l'aide de vis 76. Sur cette Figure 4 on a également représenté les glissières 28 fixées sur cette semelle.

La semelle peut pivoter autour de l'axe 34 par l'intermédiaire du pivot 54, l'axe 34 correspondant au centre du demi-cercle formé par le rail 62. Les patins peuvent coulisser dans le rail 62 tout en étant retenus par le profilé en T dans ce même rail, évitant ainsi tout basculement du siège.

Le patin de stabilisation 58 facilite le mouvement des patins dans le rail en assurant un meilleur guidage, une meilleure stabilisation du siège, et également une meilleure répartition du poids.

Le siège peut prendre deux positions, centrale et latérale, et sur la Fig. 3 on a représenté dans ces deux positions, respectivement en 20 et en 20′, l'axe de rotation du siège par rapport au bâti 18 porté par la semelle 32 ; la position 20′ est obtenue par rotation de la semelle 32 autour de l'axe 34, avec glissement des patins 56, 58 et 60 dans le rail 62, le patin 56 venant en butée contre l'extrémité 62a du rail 62 tandis que le patin 60 occupe la position initiale du patin 56.

On remarque que l'angle alpha du pivotement de la semelle entre sa position centrale et sa position latérale est un angle sensiblement de 90°. On a représenté en trait mixte la position des glissières 28 après que la semelle 32 ait effectué une rotation de 90°. Ces glissières 28 sont alors perpendiculaires au côté 48, c'est-à-dire perpendiculaires à la porte latérale d'accès arrière 50. Les flèches 78 et 80 matérialisent respectivement les mouvements de translation possibles grâce aux glissières dans les deux positions de l'axe 20 et 20′.

Dans sa position centrale, la semelle 32 est espacée du côté 48 d'une distance sensiblement égale à la largeur du siège, tandis que, dans sa position latérale, elle est proche du côté 48 et, donc, de la porte latérale d'accès arrière 50. La flèche 82 matérialise la rotation de la semelle 32 tandis que la flèche 84 matérialise la possibilité de rotation sur 360° grâce au premier dispositif de pivotement 16.

Un tel agencement permet donc un grand nombre de combinaisons dont certaines sont représentées aux Fig. 5A à 5E dans le cas où le véhicule considéré comporte une rangée de siège avant 86, une rangée de sièges médians 88 avec deux sièges indépendants 10 et 100 ainsi qu'une rangée de sièges arrière 90 comportant, dans l'exemple représenté, une seule et même banquette. Le siège 100 comprend un dossier 140, une assise 120, des glissières 128 et un dispositif unique de rotation 160.

Sur la Fig. 3, les sièges médians 10 et 100 sont disposés dans une configuration classique selon laquelle l'accès au siège arrière 90 est facilité par le dégagement du plancher au droit de la porte 50. Le réglage en translation avant/arrière est toujours possible sur le siège 10 puisque les glissières 28 sont orientées parallèlement à la direction 44.

La Fig. 5A montre les deux sièges médians 10 et 100 dans une disposition suivant laquelle le siège 10 est écarté du siège 100, cette position étant obtenue par un double mouvement du même siège, à savoir une rotation de la semelle 32 autour de l'axe 34 qui amène l'axe 20 en position 20′ et une rotation du premier dispositif de pivotement 16 dans le sens contraire des aiguilles d'une montre d'un quart de tour, de façon à ramener le siège dans son orientation initiale.

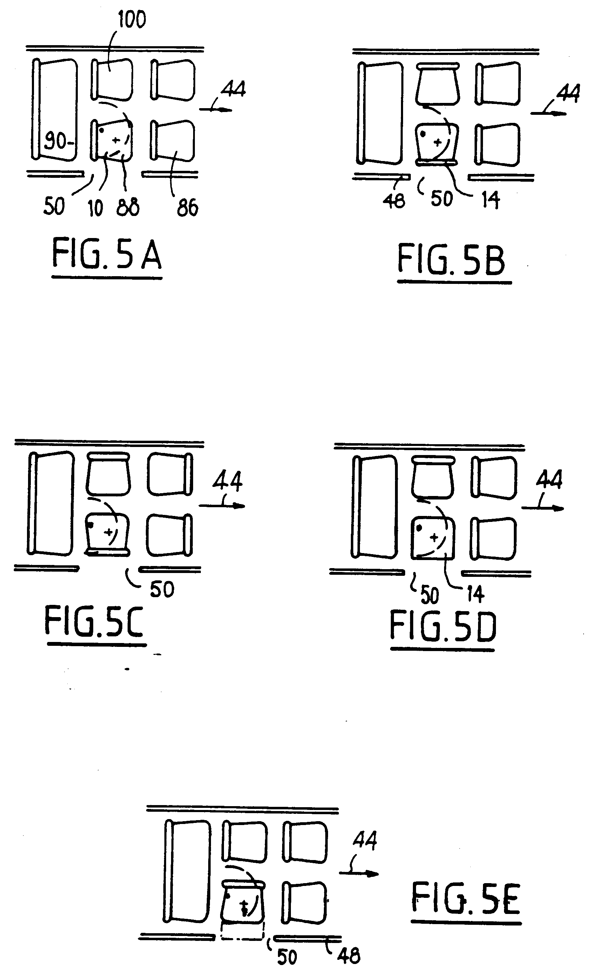

A la suite d'un quart de tour supplémentaire du premier dispositif de pivotement autour de l'axe 20′, le siège 10 se retrouve dans la position représentée sur la Figure 5B, à savoir que le dossier 14 du siège 10 est parallèle au côté 48 du véhicule et adjacent à celui-ci. Moyennant une rotation d'un quart de tour du siège 100 dans le sens des aiguilles d'une montre, il est possible d'obtenir une configuration selon laquelle les sièges 10 et 100 sont en vis-à-vis et permettent avec la rangée de sièges arrière 90, de constituer un "salon".

Sur la Fig. 5C et moyennant la rotation d'un demi-tour de chacun des sièges avant il est possible de réaliser une configuration "salon" faisant participer l'ensemble des passagers qui occupent les différents sièges du véhicule, y compris les sièges avant.

Sur la Fig. 5D on a représenté le siège 10 dans une configuration selon laquelle le dossier 14 a été abaissé ainsi que cela est indiqué en trait mixte sur la Fig.2 constituant ainsi une table utilisable par le passager du siège 100 ainsi que les passagers de la rangée de sièges 90. Cette disposition du dossier 14 formant table peut également être appliquée dans la configuration représentée à la Fig.5C ou 5A lorsque le siège 10 est vacant.

La présente invention permet également de proposer une configuration particulière grâce à l'orientation des glissières 28. En effet, lorsque l'axe de rotation 20 est en position 20′, les glissières 28 sont orientées perpendiculairement à la porte d'accès 50.

A partir de sa position centrale telle que représentée à la Fig.3, après rotation de la semelle 32 d'un quart de tour de façon à amener l'axe 20 en position 20′, le siège 10 peut être translaté sur ses glissières 28 et moyennant un débattement suffisant, l'assise 12 du siège 10 peut être avancée du droit de la limite extérieure du côté 48, à travers l'ouverture libérée par la porte d'accès.

L'agencement selon l'invention présente de nombreux avantages notamment dans la configuration 5E. Cet agencement permet en effet de faciliter l'installation de passagers handicapés puisque le siège 10 est facilement accessible et que les mouvements pour le ramener en position initiale peuvent s'effectuer avec le passager assis sur le siège 10.

D'autre part dans la configuration représentée à la Fig.5C, le véhicule permet à sept personnes de pouvoir se réunir.

On remarque également que les différentes manoeuvres pour changer de configuration sont très simples et peu nombreuses et elles ne font appel dans tous les cas qu'à des manoeuvres d'un seul et même siège. Dans la position représentée Fig.3 le siège 10 conserve sa possibilité de réglage avant - arrière de façon à s'adapter à la morphologie du passager, quant au rail 62 son encombrement est très limité et ne provoque aucune gêne à l'emplacement des pieds des passagers lorsque les sièges sont orientés parallèlement à la direction 44.

## Revendications

1. Agencement de siège, sur un plancher (42) de véhicule, situé derrière un siège avant au droit d'une porte latérale (50) d'accès d'un véhicule, comportant une assise munie d'un premier dispositif de pivotement (16), sur une semelle (32) sensiblement carrée mobile par rapport au plancher (42), autour d'un premier axe vertical de rotation (20) passant sensiblement par le centre de l'assise, caractérisé en ce que la semelle (32) comprend un second dispositif de pivotement (36) par rapport au plancher (42) autour d'un second axe vertical de rotation (34) excentré par rapport au premier axe (20) et situé à une distance de la porte latérale d'accès (50) sensiblement égale à la largeur d'un siège.

2. Agencement selon la revendication 1, caractérisé en ce que le second axe vertical de rotation (34) est disposé dans un angle de la semelle (32).

3. Agencement selon l'une quelconque des revendications précédentes, caractérisé en ce que le second dispositif de pivotement comprend des moyens de verrouillage (38) de la semelle (32) par rapport au plancher dans deux positions faisant entre elles un angle de 90°.

4. Agencement selon l'une quelconque des revendications précédentes, caractérisé en ce que le second dispositif de pivotement (36) comprend au moins deux patins (56 et 60) fixés à la semelle (32), reçus à glissement dans un rail (62) courbe solidaire du plancher (42) et un pivot (54) dont l'axe de rotation est le second axe vertical de rotation (34).

5. Agencement selon la revendication 4, caractérisé en ce que le rail (62) courbe est une portion de cercle centrée sur le second axe vertical de rottion (34) et dont la corde est orientée perpendiculairement à l'axe longitudinal (44) du véhicule.

6. Agencement selon l'une quelconque des revendications 4 et 5, caractérisé en ce que les patins de maintien (56,60) sont situés sensiblement au droit de deux angles diagonalement opposés de la semelle (32).

7. Agencement selon l'une quelconque des revendications précédentes, caractérisé en ce que le premier dispositif de pivotement (16) est monté sur des glissières rectilignes (28) fixées sur la semelle (32) et orientées parallèlement aux bords de celle-ci.

## Patentansprüche

1. Sitzanordnung, auf einem Fahrzeugboden (42), die sich hinter einem Vordersitz seitlich neben einer seitlichen Zutrittstür (50) eines Fahrzeugs befindet, mit einem Sitzteil, der auf einer im wesentlichen quadratischen Fußplatte (32), die bezüglich des Bodens (42) beweglich ist, mit einer ersten Schwenkvorrichtung (16) zum Schwenken um eine im wesentlichen durch die Mitte des Sitzes verlaufende erste vertikale Drehachse (20) versehen ist, dadurch gekennzeichnet, daß die Fußplatte (32) eine zweite Schwenkvorrichtung (36) zum Schwenken bezüglich des Bodens (42) um eine zweite vertikale Drehachse (34), die bezüglich der ersten Achse (20) exzentriert ist und in einem Abstand von der seitlichen Zutrittstür (50) liegt, der im wesentlichen gleich der Breite des Sitzes ist, aufweist.

2. Anordnung nach Anspruch 1, dadurch gekennzeichnet, daß die zweite vertikale Drehachse (34) in einer Ecke der Fußplatte (32) angeordnet ist.

3. Anordnung nach irgendeinem der vorstehenden Ansprüche, dadurch gekennzeichnet, daß die zweite Schwenkvorrichtung Mittel (38) zum Verriegeln der Fußplatte (32) bezüglich des Bodens in zwei Stellungen, die zueinander einen Winkel von 90° einschließen, aufweist.

4. Anordnung nach irgendeinem der vorstehenden Ansprüche, dadurch gekennzeichnet, daß die zweite Schwenkvorrichtung (36) wenigstens zwei an der Fußplatte (32) befestigte Schuhe (56 und 60) die in einer mit dem Boden (42) fest verbundenen gekrümmten Schiene (62) gleitend aufgenommen sind, und einen Schwenkzapfen (54) aufweist, dessen Drehachse die zweite vertikale Drehachse (34) ist.

5. Anordnung nach Anspruch 4, dadurch gekennzeichnet, daß die gekrümmte Schiene (62) ein auf die zweite vertikale Drehachse (34) zentrierter Kreisabschnitt ist, dessen Sehne senkrecht zur Längsachse (44) des Fahrzeugs orientiert ist.

6. Anordnung nach irgendeinem der Ansprüche 4 und 5, dadurch gekennzeichnet, daß die Halteschuhe (56, 60) im wesentlichen an zwei diagonal gegenüberliegenden Ecken der Fußplatte (32) angeordnet sind.

7. Anordnung nach irgendeinem der vorstehenden Ansprüche, dadurch gekennzeichnet, daß die erste Schwenkvorrichtung (16) auf geraden Gleitschienen (28) angebracht ist, die an der Fußplatte (32) befestigt und parallel zu deren Rändern ausgerichtet sind.

## Claims

1. Seat arrangement, on a vehicle floor (42), situated behind a front seat in line with a side door (50) for access to a vehicle, comprising a squab provided with a first pivoting device (16), on a substantially square sole-piece (32) which is movable with respect to the floor (42), about a first vertical axis of rotation (20) passing substantially through the centre of the squab, characterised in that the sole-piece (32) comprises a second device (36) for pivoting with respect to the floor (42) about a second vertical axis of rotation (34), which is eccentric with respect to the first axis (20) and situated at a distance from the side access door (50), which distance is substantially equal to the width of a seat.

2. Arrangement according to Claim 1, characterised in that the second vertical axis of rotation (34) is disposed in a corner of the sole-piece (32).

3. Arrangement according to one of the preceding Claims, characterised in that the second pivoting device comprises means (38) for locking the sole-piece (32) with respect to the floor in two positions forming an angle of 90° therebetween.

4. Arrangement according to one of the preceding Claims, characterised in that the second pivoting device (36) comprises at least two runners (56 and 60) fixed to the sole-piece (32), received to slide in a curved rail (62) integral with the floor (42) and a pivot (54), whereof the axis of rotation is the second vertical axis of rotation (34).

5. Arrangement according to Claim 4, characterised in that the curved rail (62) is a portion of a circle centered on the second vertical axis of rotation (34) and whereof the chord is oriented perpendicularly to the longitudinal axis (44) of the vehicle.

6. Arrangement according to one of Claims 4 and 5, characterised in that the retaining runners (56, 60) are situated substantially in line with two diagonally opposed corners of the sole-piece (32).

7. Arrangement according to one of the preceding Claims, characterised in that the first pivoting device (16) is mounted on rectilinear guides (28) fixed to the sole-piece (32) and oriented parallel to the edges of the latter.
